# EUROPÄISCHE PATENTSCHRIFT

(11) **EP 0 925 968 B1**
(45) Veröffentlichungstag und Bekanntmachung des Hinweises auf die Patenterteilung: **09.07.2003**
(21) Anmeldenummer: 98123643.3
(22) Anmeldetag: 10.12.1998
(51) Int. Cl.: B60H 1/00

(54) **Bedieneinheit für eine Fahrzeugkomponente, insbesondere für das Steuergerät einer Klimaanlage**
Operating unit of an automotive component, especially for the control unit of an air conditioning device of a vehicle
Unité de commande d'un élément de véhicule en particulier pour le dispositif de commande d'un conditionnement d'air dans un véhicule

(30) Priorität: 24.12.1997 DE 19757929
(43) Veröffentlichungstag der Anmeldung: 30.06.1999
(73) Patentinhaber: Hella KG Hueck & Co., 59552 Lippstadt (DE)
(72) Erfinder: Adamczak, Jürgen, 59555 Lippstadt (DE); Laukemper, Franz-Josef, 33397 Rietberg (DE); Wenning, Frank, 33699 Bielefeld (DE)

(56) Entgegenhaltungen:
- EP-A- 0 577 502
- US-A- 4 096 368
- US-A- 4 376 879
- US-A- 4 392 029
- US-A- 5 577 422

## Beschreibung

Die Erfindung betrifft eine Bedieneinheit für eine Fahrzeugkomponente, bei der es sich insbesondere um das Steuergerät einer Kfz-Klimaanlage handelt.

Für die diversen Fahrzeugkomponenten, wie beispielsweise das Steuergerät einer Kfz-Klimaanlage, eine Radio-/Kassetten-/CD-Hifi-Einheit, ein Navigationssystem o.dgl., sind Bedieneinheiten erforderlich, um die einzelnen Funktionen, die bei derartigen Fahrzeugkomponenten vorhanden sind, selektieren und aktivieren zu können. Diese Bedieneinheiten weisen im Regelfall eine Frontblende auf, die mit mehreren Aufnahmeaussparungen versehen ist, in denen die einzelnen Bedienelemente in Form von Tasten linear verschiebbar geführt sind. Mittels dieser Bedienelemente werden Schalter bzw. Schaltmatten betätigt, die auf einer hinter der Frontblende angeordneten Trägerplatte in Form einer Leiterplatine angeordnet sind. Es ist aber grundsätzlich auch denkbar, dass durch manuelle Betätigung der Bedienelemente nicht elektrische sondern mechanische Schaltvorgänge ausgelöst werden.

Aus optischen und Design-Gründen ist es wünschenswert, dass die Bedienelemente mit geringem Spaltenmaß in der Frontblende geführt sind. Dies gilt umso mehr bei Bedieneinheiten, bei denen die einzelnen Bedienelemente ohne sichtbaren Trennsteg unmittelbar aneinander angrenzen. Um bei minimalen Bedienelement-Abständen bzw. Spaltenmaßen eine Berührung benachbarter Bedienelemente bzw. der Bedienelemente mit der Frontblende verhindern zu können, ist es notwendig, dass die Bedienelemente kippfrei und verdrehsicher linear an bzw. in der Frontblende geführt sind. Zur Lösung dieses Problems ist eine geradlinige Tastenführung bekannt, wie sie in DE 44 01 644 C2 beschrieben ist. Die dort beschriebene Bedienelement-Führung weist eine aufwendige Hebelarmkonstruktion auf, die mehrere von dem Bedienelement schwenkbare Hebel aufweist, welche über eine Verzahnung miteinander gekoppelt sind und verschiebbar an dem Bedienelement geführt sind. Die geradlinige Tastenführung bei dieser bekannten Konstruktion setzt ein lediglich geringes Spiel der drehbar und verschiebbar miteinander zusammenwirkenden Einzelteile voraus, was sowohl hinsichtlich der Herstellung als auch der Montage mit einem erhöhten Aufwand verbunden ist.

Aus EP-A-0577502 ist eine Bedieneinheit für eine Fahrzeugkomponente bekannt, wie sie im Oberbegriff der Ansprüche 1 und 2 angegeben ist. Die Bedienelemente dieser bekannten Bedieneinheit weisen an ihren vier Seiten Führungsflächen auf, die mit Führungsflächen der die Bedienelemente aufnehmenden Aufnahmevertiefungen der Frontblende zusammenwirken.

Der Erfindung liegt die Aufgabe zugrunde, eine Bedieneinheit für eine Fahrzeugkomponente zu schaffen, die bei denkbar einfachem Aufbau ein Höchstmaß an geradliniger Bedienelement-Führung gewährleistet.

Zur Lösung dieser Aufgabe wird mit der Erfindung eine Bedieneinheit für eine Fahrzeugkomponente, insbesondere für das Steuergerät einer Klimaanlage, gemäß Anspruch 1 oder Anspruch 2 vorgeschlagen.

Bei der erfindungsgemäßen Bedieneinheit wird jedes Bedienelement in der ihm zugeordneten Aufnahmeaussparung der Frontblende entlang mehrerer Paare erster und zweiter Führungsflächen geführt. Diese ersten und zweiten Führungsflächen liegen paarweise einander gegenüber und verlaufen sämtlich parallel zur Verschiebungsrichtung des Bedienelementes. Dabei sind die ersten Führungsflächen an dem Bedienelement und die zweiten Führungsflächen in der Aufnahmeaussparung ausgebildet. Zwei erste Paare von ersten und zweiten Führungsflächen sind beidseitig von und parallel zu einer ersten Ebene angeordnet, die parallel zur Verschiebungsrichtung aufgespannt ist. Diese erste Ebene wird nachfolgend auch mit "Horizontalebene" bezeichnet. Schrägverlaufend und insbesondere orthogonal gerichtet zu dieser Horizontalebene lässt sich eine zweite Ebene (nachfolgend auch mit "Vertikalebene" bezeichnet) definieren, die ebenfalls parallel zur Verschiebungsrichtung aufgespannt ist. Bei Betrachtung in Verschiebungsrichtung lässt sich damit das Bedienelement und die zugehörige Aufnahmeaussparung anhand eines insbesondere orthogonalen Achsenkreuzes definieren, dessen Achsen horizontal und vertikal verlaufen. Die horizontale Achse liegt dabei in der Horizontalebene, während die vertikale Achse in der Vertikalebene liegt. Orthogonal zu diesen beiden Achsen steht die dritte Achse des dreidimensionalen Achsensystems, auf der die Verschiebungsrichtung liegt und die parallel zu oder identisch mit der Schnittlinie der beiden Ebenen verläuft bzw. ist. Die beiden ersten Paare von ersten und zweiten Führungsflächen liegen somit oberhalb und unterhalb der Horizontalachse. Mit anderen Worten liegt also das eine erste Führungsflächenpaar im ersten mathematischen Quadranten, während das andere Führungsflächenpaar im dritten mathematischen Quadranten diese Achsenkreuzes liegt. Die beiden anderen Führungsflächenpaare (nachfolgend mit zweite Führungsflächenpaare bezeichnet) liegen beidseitig der Vertikalachse, wobei die wechselseitige Anordnung derart ist, dass ein zweites Führungsflächenpaar wiederum im ersten mathematischen Quadranten und das andere zweite Führungsflächenpaar im dritten mathematischen Quadranten liegt. Alternativ zu der vorstehend beschriebenen Anordnung der ersten und zweiten Führungsflächenpaare kann auch vorgesehen sein, dass diese im zweiten und im vierten mathematischen Quadranten liegen.

Mit anderen Worten liegen also jeweils ein erstes und ein zweites Führungsflächenpaar in jedem der beiden zueinander punktsymmetrischen Bereichen, die durch die sich schneidenden ersten und zweiten Ebenen begrenzt sind. Diese Bereiche entsprechen den ersten und dritten bzw. zweiten und vierten mathematischen Quadranten, wie sie oben beschrieben sind.

Gemäß der in Anspruch 1 beschriebenen Variante der erfindungsgemäßen Bedieneinheit weist das mindestens eine Bedienelement 4 in dessen Verschiebungsrichtung verlaufende Führungsnuten mit jeweils zwei Seitenflanken auf, von denen die eine als erste Führungsfläche ausgebildet ist. Ferner weist die mindestens eine Aufnahmeaussparung vier in Verschiebungsrichtung des Bedienelements verlaufende, in die Führungsnuten des Bedienelements eingetauchte Führungsrippen mit jeweils zwei Seitenflanken auf, von denen die eine als zweite Führungsfläche ausgebildet ist.

Bei der in Anspruch 2 definierten weiteren Variante der erfindungsgemäßen Bedieneinheit ist das mindestens eine Bedienelement mit vier in dessen Verschiebungsrichtung verlaufenden Führungsrippen mit jeweils zwei Seitenflanken versehen, von denen die eine als erste Führungsfläche ausgebildet ist, während die Ausnahmeaussparung vier in Verschiebungsrichtung des Bedienelements verlaufende, die Führungsrippen des Bedienelementes aufnehmende Führungsnuten mit jeweils zwei Seitenflanken aufweist, von denen die eine als zweite Führungsfläche ausgebildet ist.

Die obigen Betrachtungen der Anordnung der ersten und zweiten Führungsflächen gelten ganz entsprechend auch bei einem Achsenkreuz, dessen die beiden Ebenen repräsentierenden quer zur Schnittlinie verlaufenden Achsen in einem von 90° verschiedenen Winkel verlaufen. Je nach Ausrichtung dieser beiden Achsen kann der Fall eintreten, dass in jedem "Quadranten" (dieser Ausdruck trifft hier strenggenommen nicht zu, da die Achsen sich nicht unter 90° schneiden) jeweils eines der vier Führungsflächenpaare angeordnet ist. Eine derartige Situation lässt sich jedoch immer durch Verdrehung der Achsen auf den oben beschriebenen Fall zurückführen, so dass die ersten und zweiten Führungsflächen wieder beidseitig der Achsen bzw. Ebenen liegen.

Bei der erfindungsgemäßen Bedieneinheit berühren sich das Bedienelement und die Frontblende lediglich entlang der vier Führungsflächenpaare. In sämtlichen Bereichen außerhalb der ersten bzw. zweiten Führungsflächen berühren sich das Bedienelement und die Aufnahmeaussparung nicht. Die Anordnung dieser Führungsflächenpaare so, wie oben beschrieben, verhindert ein Verdrehen des Bedienelementes um eine in Verschiebungsrichtung verlaufende Drehachse. Anders ausgedrückt, verhindern die Führungsflächenpaare Kippbewegungen des Bedienelementes um in der ersten und der zweiten Ebene liegende Drehachsen. Damit ist eine exakte geradlinige Führung des Bedienelementes gewährleistet, und zwar auch dann, wenn das Bedienelement außermittig mit dem Finger betätigt wird.

Der Vorteil der erfindungsgemäßen Bedieneinheit ist zunächst einmal darin zu sehen, daß es zu keinerlei Verdrehung bzw. Verkippung des Bedienelementes bei dessen manueller Betätigung kommt. Als Folge davon kann nun Sorge dafür getragen werden, daß sich das Bedienelement und die Frontblende auch bei einem noch so kleinem Mindest-Spaltenmaß nicht berühren. Derartige Reibkontakte bei der Bedienelement-Betätigung zwischen dem Bedienelement und der Aufnahmeaussparung der Frontblende sind insofern von Nachteil, als es zu Beschädigungen der lackierten Flächen an dem Bedienelement und der Frontblende kommen kann. Mit der erfindungsgemäß vorgesehenen Bedienelement-Führung ist eine derartige ungewollte Berührung ausgeschlossen, da Verkantungen, Kippungen und Verdrehungen des Bedienelementes verhindert werden, sich dieses also exakt geradlinig und unter Beibehaltung seiner parallelen Ausrichtung zur Aufnahmeaussparung verschiebt, wenn mit dem Finger der Hand gegen das Bedienelement gedrückt wird.

Aus optischen und Design-Gründen ist es zweckmäßig, die seitlichen Begrenzungsflächen des Bedienelementes und der Aufnahmeaussparung von Führungsfunktionen und somit von den Führungsflächen freizuhalten. Daher ist gemäß einer vorteilhaften Weiterbildung der Erfindung vorgesehen, daß die ersten und zweiten Führungsflächen winklig und insbesondere unter einem Winkel von im wesentlichen °90 zu den Begrenzungsflächen von Bedienelement und Aufnahmeaussparung verlaufen. Die ersten und zweiten Führungsflächen sind insbesondere an den Seitenflanken von Führungsrippen und diese aufnehmende Führungsnuten angeordnet, die in der Aufnahmeaussparung und an dem Bedienelement vorgesehen sind. Jeweils eine von den beiden Seitenflanken einer Führungsrippe bzw. einer Führungsnut sind dabei als erste bzw. zweite Führungsfläche im oben beschriebenen Sinne ausgebildet.

Bei der erfindungsgemäßen Bedieneinheit bestehen die Frontblende und das oder die Bedienelemente vorzugsweise aus Kunststoff. Insbesondere sind diese Teile und Elemente in Spritzgußtechnik hergestellt. Um bei Ausgestaltung der erfindungsgemäßen Bedienelement-Führung mittels ineinandergreifender Führungsrippen und Führungsnuten die Spritzgußteile entformen zu können, bedarf es grundsätzlich einer konischen Ausführung dieser Führungsnuten und -rippen. Nachdem zur Realisierung der erfindungsgemäß vorgesehenen geradlinigen Bedienelement-Führung parallel zur Verschieberichtung verlaufende Führungsflächen vorgesehen sind und diese Führungsflächen an jeweils einer der beiden Seitenflanken der Führungsrippen und -nuten ausgebildet sind, verlaufen die jeweils anderen Seitenflanken der Führungsrippen und -nuten sowie gegebenenfalls die Führungsrippen-Oberseiten und die Führungsnuten-Grundflächen konisch. Damit ist ein Entformen der Frontblende und des Bedienelementes aus dem Spritzgußwerkzeug weiterhin möglich, ohne auf nach der Erfindung vorgesehene parallele Führungsflächen an den Führungsrippen und Führungsnuten verzichten zu müssen.

Ein weiterer Vorteil der Ausgestaltung der Führungsflächen an miteinander zusammenwirkenden Führungsnuten und Führungsrippen der Frontblende und des Bedienelementes besteht darin, daß nun diese Rippen- bzw. Nutenstruktur auch zur Codierung der einzelnen Bedienelemente in der Frontblende eingesetzt werden kann.

Nachfolgend wird anhand der Figuren ein Ausführungsbeispiel der Erfindung näher erläutert. Im einzelnen zeigen:
- Fig. 1: eine Vorderansicht auf eine Bedieneinheit,
- Fig. 2: eine perspektivische Explosionsdarstellung eines Ausschnitts der Frontblende der Bedieneinheit mit davor gelagertem Bedienelement,
- Fig. 3: einen Schnitt entlang der Linie III-III der Fig. 2 durch ein vor einer Aufnahmeaussparung der Frontblende angeordnetes Bedienelement und
- Fig. 4: eine Draufsicht auf die Bedieneinheit bei außerhalb der Frontblende eingezeichnetem Bedienelement in Richtung des Pfeils IV der Fig. 2.

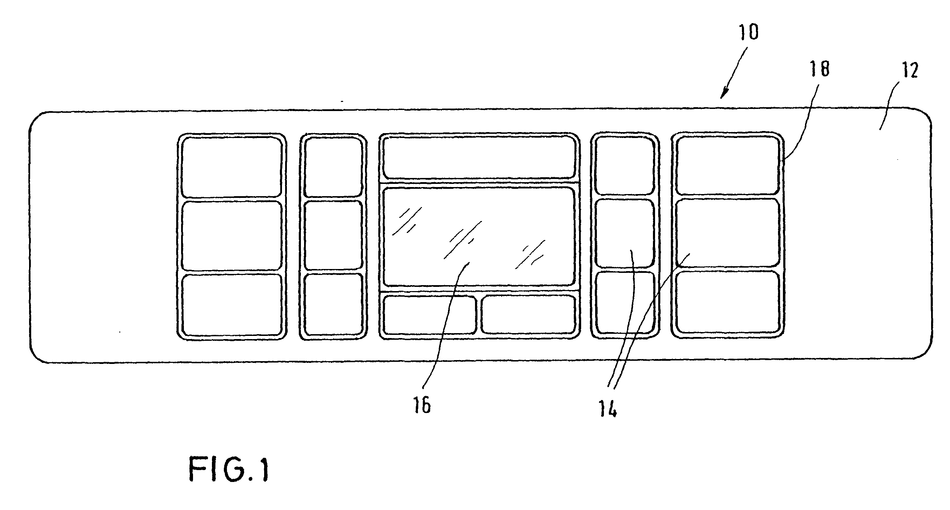

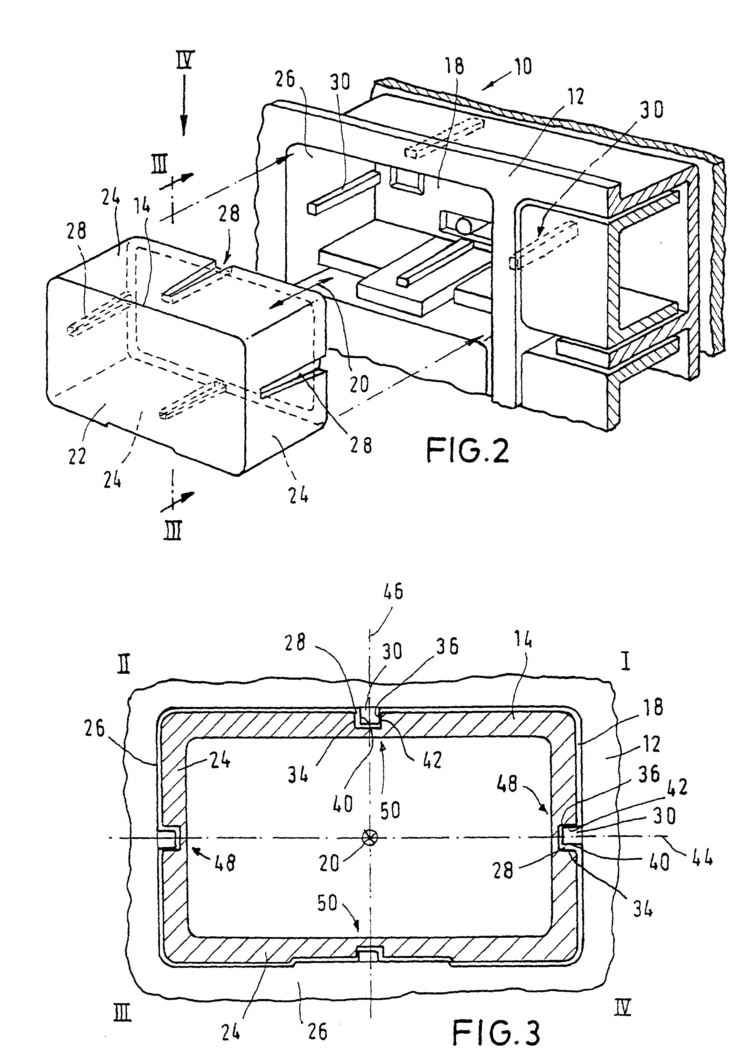

Fig. 1 zeigt eine Draufsicht auf eine Bedieneinheit 10, die eine Frontblende oder Abdeckung 12 mit einer Vielzahl von Bedienelementen 14 und einem Display 16 aufweist. Jedes Bedienelement 14 ist in einer ihm zugeordneten Aussparung 18 der Frontblende 12 in einer im wesentlichen rechtwinklig zur Oberseite der Frontblende 12 verlaufenden Verschiebungsrichtung 20 linear verschiebbar geführt (s. auch Fig. 2). Jedes Bedienelement 14 weist eine Vorderwand 22 gegebenenfalls mit einem hinterleuchteten Symbolfeld und vier von der Vorderwand 22 abstehende Seitenwände 24 auf. Jede Aufnahmeaussparung 18 ist mit vier seitlichen Begrenzungswänden 26 versehen, die von der Frontblende 12 abstehen und zu den Seitenwänden 24 des Bedienelementes 14 unter Einhaltung eines Mindest-Spaltenmaßes parallel verlaufen.

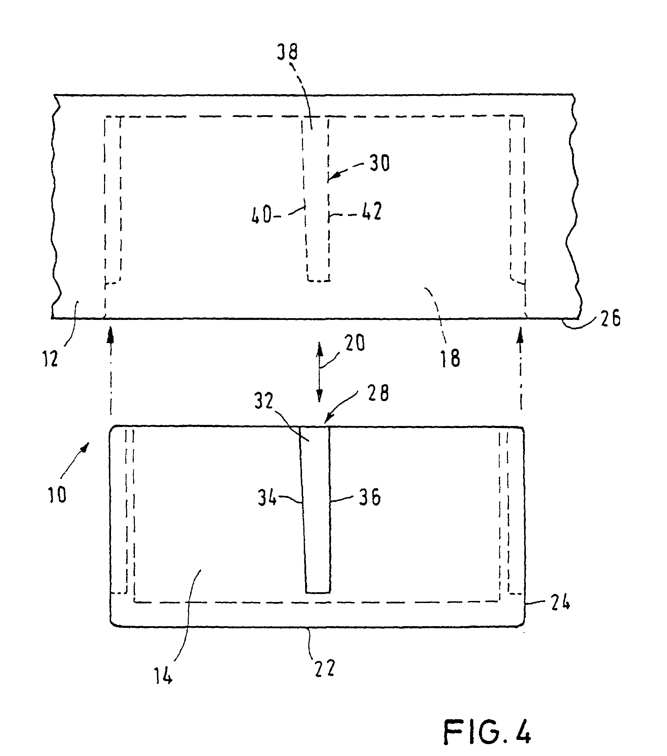

Wie insbesondere anhand der Fign. 2 bis 4 zu erkennen ist, weist jede Seitenwand 24 des Bedienelementes 14 eine Führungsnut 28 auf, während jede Begrenzungswand 26 der zugehörigen Aufnahmeaussparung 18 eine Führungsrippe 30 aufweist. Jede Führungsnut 28 weist einen Nutgrund 32 sowie zwei Flanken 34,36 auf, wobei die eine der beiden Flanken, nämlich die Flanke 36, parallel zur Verschiebungsrichtung 20 verläuft, während die andere Flanke 34 konisch verläuft, so daß sich die Führungsnut 28 zum der Vorderwand 22 abgewandten Ende des Bedienelementes 14 aufweitet. Andererseits weist jede Führungsrippe 30 eine Oberseitenfläche 38 sowie zwei seitliche Flanken 40,42 auf. Eine der beiden Seitenflanken, in diesem Ausführungsbeispiel die Seitenflanke 42 verläuft parallel zur Verschiebungsrichtung 20, während die andere Seitenflanke 40 winklig zur Verschiebungsrichtung 20 sich erstreckt und insbesondere parallel zur konischen Seitenflanke 34 der zugehörigen Führungsnut 28 verläuft. Auf diese Weise ist die Führungsrippe 38 konisch und verjüngt sich zu ihrem der Vorderwand 22 des Bedienelementes 14 zugewandten vorderen Ende.

Die Besonderheit der Bedienelement-Führung mittels der Führungsnuten 28 und der Führungsrippen 30 wird anhand von Fig. 3 deutlich. In Fig. 3 ist ein Schnitt durch das vor der Aufnahmeaussparung 18 angeordnete Bedienelement 14 dargestellt, wobei die Verschiebungsrichtung 20 senkrecht zur Zeichnungsebene verläuft. Das Bedienelement 14 und die Aufnahmeaussparung 18 sind durch zwei Ebenen 44,46 in vier Quadranten I-IV unterteilt. Die beiden Ebenen 44,46 stehen senkrecht aufeinander und sind jeweils parallel zur Verschiebungsrichtung 20 aufgespannt. Mit anderen Worten bildet sich zwischen beiden Ebenen 44,46 eine Schnittlinie, die parallel zur Verschiebungsrichtung 20 verläuft. Die jeweils parallel zur Verschiebungsrichtung 20 verlaufenden Seitenflanken 36,42 einer jeden Führungsnut 28 und einer jeden Führungsrippe 38 liegen aneinander und bilden erste und zweite Führungsflächenpaare 48,50. Die Besonderheit besteht darin, daß die beiden ersten Führungsflächenpaare 48 beidseitig der ersten Ebene 44, also ein erstes Führungsflächenpaar 48 oberhalb und das andere Führungsflächenpaar 48 unterhalb der (Horizontal-)Ebene 44 angeordnet sind, während die zweiten Führungsflächenpaare 50 beidseitig der zweiten (Vertikal-)Ebene 46 positioniert sind. Wie anhand von Fig. 3 zu erkennen ist, befinden sich also im ersten mathematischen Quadranten 1 ein erstes und ein zweites Führungsflächenpaar 48,50, während die jeweils anderen Führungsflächenpaare 48,50 im dritten mathematischen Quadranten III angeordnet sind. Auf diese Weise verhindern die ersten Führungsflächenpaare 48 eine Verdrehung des Bedienelementes 14 im Uhrzeigersinn um eine parallel zur Verschiebungsrichtung 20 verlaufende Drehachse, während die zweiten Führungsflächenpaare 50 eine Verdrehung im entgegengesetzten Uhrzeigersinn um diese Drehachse verhindern. Zu derartigen Drehbewegungen führende Drehmomente treten beispielsweise bei außermittiger Betätigung der Bedientaste 14 auf. Anders ausgedrückt verhindern also die im ersten und dritten mathematischen Quadranten I und III oder gemäß einer alternativen Ausgestaltung im zweiten und vierten mathematischen Quadranten II und IV angeordneten ersten und zweiten Führungsflächenpaare 48,50 ein Kippen des Betätigungselementes 14 um in der Zeichnungsebene der Fig. 3 liegende Achsen. Die Drehmomente, die zu einer Kippbewegung um diese Achsen führen können, treten ebenfalls bei der Betätigung des Bedienelementes 14 auf.

Wegen der nahezu vollständigen Verhinderung jedweder Dreh- bzw. Kippbewegungen des Bedienelementes 14 bei dessen Betätigung ist es möglich, den Spalt zwischen den Seitenwänden 24 des Bedienelementes 14 und den Begrenzungswänden 26 der zugehörigen Aufnahmeaussparung 18 auf ein Mindestmaß zu verengen. Dies wiederum hat optische bzw. designerische Vorteile. Insbesondere läßt sich damit eine Bedieneinheit 10 mit direkt aneinandergrenzenden Bedienelementen 14, also ohne dazwischen angeordnete Stege der Frontblende 12 realisieren, wobei die Bedienelement-Abstände minimal sind.

### BEZUGSZEICHENLISTE

- 10: Bedieneinheit
- 12: Frontblende
- 14: Bedienelemente
- 16: Display
- 18: Aufnahmeaussparung
- 20: Verschiebungsrichtung
- 22: Vorderwand
- 24: Seitenwände des Bedienelementes
- 26: Begrenzungswände der Aufnahmeaussparung
- 28: Führungsnut
- 30: Führungsrippen
- 32: Grund von der Führungsnut
- 34: Seitenflanke der Führungsnut
- 36: Seitenflanke der Führungsnut
- 38: Oberseite der Führungsrippe
- 40: Seitenflanke der Führungsrippe
- 42: Seitenflanke der Führungsrippe
- 44: erste (Horizontal-)Ebene
- 46: zweite (Vertikal-)Ebene
- 48: erstes Führungsflächenpaar (horizontal)
- 50: zweites Führungsflächenpaar (vertikal)
- I: erster Quadrant
- II: zweiter Quadrant
- III: dritter Quadrant
- IV: vierter Quadrant

## Patentansprüche

1. Bedieneinheit für eine Fahrzeugkomponente, insbesondere für das Steuergerät einer Klimaanlage, mit
- einer Frontblende (12),
- mindestens einer in der Frontblende (12) ausgebildeten Aufnahmeaussparung (18), und
- einem Bedienelement (14), das in der Aufnahmeaussparung (18) in einer Verschiebungsrichtung (20) linear verschiebbar geführt ist, wobei
- an dem Bedienelement (14) erste Führungsflächen (36) und in der Aufnahmeaussparung (18) zu den ersten Führungsflächen (36) korrespondierende zweite Führungsflächen (42) angeordnet sind,
- zwei erste Paare (48) von ersten und zweiten Führungsflächen (36,42) beidseitig von und parallel zu einer parallel zur Verschiebungsrichtung (20) aufgespannten ersten Ebene (44) angeordnet sind,
- zwei zweite Paare (50) von ersten und zweiten Führungsflächen (36,42) beidseitig von und parallel zu einer zweiten Ebene (46) angeordnet sind, die parallel zur Verschiebungsrichtung (20) aufgespannt ist und die erste Ebene (44) insbesondere senkrecht schneidet,
- jeweils ein erstes und ein zweites Paar (48,50) von ersten und zweiten Führungsflächen (36,42) in einem gemeinsamen von den sich schneidenden ersten und zweiten Ebenen (44,46) begrenzten Bereich (I, III) angeordnet sind, und
- die beiden so definierten Bereiche (I,III) zur Schnittlinie der beiden Ebenen (44,46) punktsymmetrisch angeordnet sind,
**dadurch gekennzeichnet,**
- **dass** das Bedienelement (14) vier in dessen Verschiebungsrichtung (20) verlaufende Führungsnuten (28) mit jeweils zwei Seitenflanken (34,36) aufweisen, von denen die eine als erste Führungsfläche (36) ausgebildet ist, und
- **dass** die Aufnahmeaussparung vier in Verschiebungsrichtung (20) des Bedienelementes (14) verlaufende, in die Führungsnuten (28) des Bedienelementes (14) eingetauchte Führungsrippen (30) mit jeweils zwei Seitenflanken (40,42) aufweist, von denen die eine als zweite Führungsfläche (42) ausgebildet ist.

2. Bedieneinheit für eine Fahrzeugkomponente, insbesondere für das Steuergerät einer Klimaanlage, mit
- einer Frontblende (12),
- mindestens einer in der Frontblende (12) ausgebildeten Aufnahmeaussparung (18),
- einem Bedienelement (14), das in der Aufnahmeaussparung (18) in einer Verschiebungsrichtung (20) linear verschiebbar geführt ist, wobei
- an dem Bedienelement (14) erste Führungsflächen (36) und in der Aufnahmeaussparung (18) zu den ersten Führungsflächen (36) korrespondierende zweite Führungsflächen (42) angeordnet sind,
- zwei erste Paare (48) von ersten und zweiten Führungsflächen (36,42) beidseitig von und parallel zu einer parallel zur Verschiebungsrichtung (20) aufgespannten ersten Ebene (44) angeordnet sind,
- zwei zweite Paare (50) von ersten und zweiten Führungsflächen (36,42) beidseitig von und parallel zu einer zweiten Ebene (46) angeordnet sind, die parallel zur Verschiebungsrichtung (20) aufgespannt ist und die erste Ebene (44) insbesondere senkrecht schneidet,
- jeweils ein erstes und ein zweites Paar (48,50) von ersten und zweiten Führungsflächen (36,42) in einem gemeinsamen von den sich schneidenden ersten und zweiten Ebenen (44,46) begrenzten Bereich (I, III) angeordnet sind und
- die beiden so definierten Bereiche (I,III) zur Schnittlinie der beiden Ebenen (44,46) punktsymmetrisch angeordnet sind,
**dadurch gekennzeichnet,**
- **dass** das Bedienelement (14) vier in dessen Verschiebungsrichtung (20) verlaufende Führungsrippe (30) mit jeweils zwei Seitenflanken (40,42) aufweist, von denen die eine als erste Führungsfläche (36) ausgebildet ist, und
- **dass** die Aufnahmeaussparung vier in Verschiebungsrichtung (20) des Bedienelementes (14) verlaufende, die Führungsrippen (30) des Bedienelementes (14) aufnehmende Führungsnuten (28) mit jeweils zwei Seitenflanken (40,42) aufweist, von denen die eine als zweite Führungsfläche (42) ausgebildet ist.

3. Bedieneinheit nach Anspruch 1 oder 2, **dadurch gekennzeichnet, dass** das Bedienelement (14) und die Aufnahmeaussparung (18) einander gegenüberliegende parallele Seiten- bzw. Begrenzungswände (24,26) aufweisen und dass die ersten und zweiten Führungsflächen (36,42) winklig, insbesondere unter einem Winkel von im Wesentlichen 90 ° zu diesen Wänden (24,26) verlaufen.

4. Bedieneinheit nach einem der Ansprüche 1 bis 3, **dadurch gekennzeichnet, dass** die jeweils andere der Seitenflanken (34,40) der Führungsnuten (28) und Führungsrippen (30) konisch verlaufen.

5. Bedieneinheit nach Anspruch 4, **dadurch gekennzeichnet, dass** das Bedienelement (14) und die Frontblende (12) als Kunststoff-Spritzgussteile ausgebildet sind.

## Claims

1. Operating unit for an automotive component, in particular for the control unit of an air-conditioning installation, comprising
- a front panel (12),
- at least one housing recess (18) formed in the front panel (12), and
- an operating element (14) which is guided so as to slide linearly in the housing recess (18) in direction of displacement (20), in which
- first guide surfaces (36) are provided on the operating element (14) and second guide surfaces (42), which correspond with the first guide surfaces (36), are provided in the housing recess (18),
- two first pairs (48) of first and second guide surfaces (36, 42) are provided on both sides of and parallel to a first plane (44) which extends parallel to the direction of displacement (20),
- two second pairs (50) of first and second guide surfaces (36, 42) are provided on both sides of and parallel to a second plane (46) which extends parallel to the direction of displacement (20) and specifically intersects the first plane (44) at right angles thereto,
- in each case a first and a second pair (48, 50) of first and second guide surfaces (36, 42) are disposed in a common region (I, III) defined by the intersecting first and second planes (44, 46), and
- the two regions (I, III) thus defined are disposed point-symmetrically with respect to the line of intersection of the two planes (44, 46),
**characterized in that**
- the operating element (14) has four guide slots (28) extending in its direction of displacement (20), each having two lateral flanks (34, 36), one of which is formed as a first guide surface (36), and
- the housing recess has four guide ribs (30), extending in direction of displacement (20) of the operating element (14) and inserted in the guide slots (28) of the operating element (14), each guide rib (30) having two lateral flanks (40, 42), one of which is formed as a second guide surface (42).

2. Operating unit for an automotive component, in particular for the control unit of an air-conditioning installation, comprising
- a front panel (12),
- at least one housing recess (18) formed in the front panel (12),
- an operating element (14) which is guided so as to slide linearly in the housing recess (18) in direction of displacement (20), in which
- first guide surfaces (36) are provided on the operating element (14) and second guide surfaces (42), which correspond with the first guide surfaces (36), are provided in the housing recess (18),
- two first pairs (48) of first and second guide surfaces (36, 42) are provided on both sides of and parallel to a first plane (44) which extends parallel to the direction of displacement (20),
- two second pairs (50) of first and second guide surfaces (36, 42) are provided on both sides of and parallel to a second plane (46) which extends parallel to the direction of displacement (20) and specifically intersects the first plane (44) at right angles thereto,
- in each case a first and a second pair (48, 50) of first and second guide surfaces (36, 42) are disposed in a common region (I, III) defined by the intersecting first and second planes (44, 46), and
- the two regions (I, III) thus defined are disposed point-symmetrically with respect to the line of intersection of the two planes (44, 46),
**characterized in that**
- the operating element (14) has four guide ribs (30) extending in its direction of displacement (20), each having two lateral flanks (40, 42), one of which is formed as a first guide surface (36), and
- the housing recess has four guide slots (28) which extend in direction of displacement (20) of the operating element (14) and receive the guide ribs (30) of the operating element (14), each guide slot (28) having two lateral flanks (40, 42), one of which is formed as a second guide surface (42).

3. Operating unit according to Claim 1 or 2, **characterized in that** the operating element (14) and the housing recess (18) have parallel side or peripheral walls (24, 26) facing one another, and **in that** the first and second guide surfaces (36, 42) run at an angle, in particular essentially at an angle of 90°, to these walls (24, 26).

4. Operating unit according to one of Claims 1 to 3, **characterized in that** in each case the other one of the lateral flanks (34, 40) of the guide slots (28) and guide ribs (30) extends in a tapering manner.

5. Operating unit according to Claim 4, **characterized in that** the operating element (14) and the front panel (12) are formed as plastic injection-moulded parts.

## Revendications

1. Unité de maniement pour un composant de véhicule, en particulier pour l'appareil de commande d'un système de climatisation, comportant
- un panneau frontal (12),
- au moins un évidement de réception (18) réalisé dans le panneau frontal (12), et
- un élément de maniement (14) qui est guidé à déplacement linéaire dans une direction de déplacement (12) dans l'évidement de réception (18),
- des premières surfaces de guidage (36) étant agencées sur l'élément de maniement (14) et des deuxièmes surfaces de guidage (42) correspondant aux premières surfaces de guidage (36) étant agencées dans l'évidement de réception (18),
- deux premières paires (48) de premières et de deuxièmes surfaces de guidage (36, 42) étant agencées des deux côtés d'un premier plan (44) défini parallèlement à la direction de déplacement (20) et parallèlement audit plan,
- deux deuxièmes paires (50) de premières et de deuxièmes surfaces de guidage (36, 42) étant agencées des deux côtés d'un deuxième plan (46) et parallèlement à celui-ci, qui est défini parallèlement à la direction de déplacement (20) et qui coupe le premier plan (44) en particulier perpendiculairement,
- une première paire (48) et une deuxième paire (50) de premières et de deuxièmes surfaces de guidage (36, 42), respectivement, étant agencées dans une région (I, III) commune limitée par le premier plan (44) et par le deuxième plan (46), qui se coupent, et
- les deux régions (I, III) ainsi définies étant agencées à symétrie ponctuelle par rapport à la ligne de coupe des deux plans (44, 46),
**caractérisée en ce que**
- l'élément de maniement (14) présente quatre gorges de guidage (28) s'étendant dans sa direction de déplacement (20) avec deux flancs latéraux (34, 36) respectifs, dont l'un (36) est réalisé en tant que première surface de guidage (36), et **en ce que**
- l'évidement de réception présente quatre nervures de guidage (30) s'étendant dans la direction de déplacement (20) de l'élément de maniement (14) et plongeant dans les gorges de guidage (28) de l'élément de maniement (14), avec chacune deux flancs latéraux (40, 42), dont l'un est réalisé en tant que deuxième surface de guidage (42).

2. Unité de maniement pour un composant de véhicule, en particulier pour l'appareil de commande d'un système de climatisation, comportant
- un panneau frontal (12),
- au moins un évidement de réception (18) réalisé dans le panneau frontal (12), et
- un élément de maniement (14) qui est guidé à déplacement linéaire dans une direction de déplacement (12) dans l'évidement de réception (18),
- des premières surfaces de guidage (36) étant agencées sur l'élément de maniement (14) et des deuxièmes surfaces de guidage (42) correspondant aux premières surfaces de guidage (36) étant agencées dans l'évidement de réception (18),
- deux premières paires (48) de premières et de deuxièmes surfaces de guidage (36, 42) étant agencées des deux côtés d'un premier plan (44) défini parallèlement à la direction de déplacement (20) et parallèlement audit plan,
- deux deuxièmes paires (50) de premières et de deuxièmes surfaces de guidage (36, 42) étant agencées des deux côtés d'un deuxième plan (46) et parallèlement à celui-ci, qui est défini parallèlement à la direction de déplacement (20) et qui coupe le premier plan (44) en particulier perpendiculairement,
- une première paire (48) et une deuxième paire (50) de premières et de deuxièmes surfaces de guidage (36, 42), respectivement, étant agencées dans une région (I, III) commune limitée par le premier plan (44) et par le deuxième plan (46), qui se coupent, et
- les deux régions (I, III) ainsi définies étant agencées à symétrie ponctuelle par rapport à la ligne de coupe des deux plans (44, 46),
**caractérisée en ce que**
- l'élément de maniement (14) présente quatre nervures de guidage (30) s'étendant dans sa direction de déplacement (20) avec deux flancs latéraux (40, 42) respectifs, dont l'un (36) est réalisé en tant que première surface de guidage (36), et **en ce que**
- l'évidement de réception présente quatre gorges de guidage (28) s'étendant dans la direction de déplacement (20) de l'élément de maniement (14) et recevant les nervures de guidage (28) de l'élément de maniement (14), avec chacune deux flancs latéraux (40, 42), dont l'un est réalisé en tant que deuxième surface de guidage (42).

3. Unité de maniement selon l'une ou l'autre des revendications 1 et 2, **caractérisée en ce que** l'élément de maniement (14) et l'évidement de réception (18) présentent des parois latérales ou de limitation (24, 26), respectivement, parallèles et opposées l'une à l'autre et **en ce que** les premières et les deuxièmes surfaces de guidage (36, 42) s'étendent en angle, en particulier sous un angle de sensiblement 90° par rapport à ces parois (24, 26).

4. Unité de maniement selon l'une des revendications 1 à 3, **caractérisée en ce que** les autres flancs latéraux respectifs (34, 40) des gorges de guidages (28) et des nervures de guidage (30) s'étendent en forme de cône.

5. Unité de maniement selon la revendication 4, **caractérisée en ce que** l'élément de maniement (14) et le panneau frontal (12) sont réalisés sous forme de pièces en matière plastique moulée par injection.
